# EUROPEAN PATENT SPECIFICATION

(11) **EP 1 413 952 B1**
(45) Date of publication and mention of the grant of the patent: **18.01.2012**
(21) Application number: 01947867.6
(22) Date of filing: 05.07.2001
(51) Int. Cl.: G06F 9/06, G06F 9/445, G06F 12/00, G06F 15/00, G06F 15/02, G06F 17/30

(54) **START UP OF APPLICATION ON INFORMATION PROCESSOR BY MEANS OF PORTABLE UNIT**
HERAUFFAHREN EINER ANWENDUNG AUF EINEM INFORMATIONSPROZESSOR MITTELS EINER TRAGBAREN EINHEIT
DEMARRAGE D'APPLICATION SUR UN PROCESSEUR D'INFORMATION AU MOYEN D'UNE UNITE PORTATIVE

(43) Date of publication of application: 28.04.2004
(73) Proprietor: FUJITSU LIMITED, Kawasaki-shi, Kanagawa 211-8588 (JP)
(72) Inventor: HARA, Yasushi, c/o FUJITSU LIMITED, Kawasaki-shi, Kanagawa 211-8588 (JP); YAMADA, Isamu, c/o FUJITSU LIMITED, Kawasaki-shi, Kanagawa 211-8588 (JP); NAKASHIMA, Yoshiyasu, c/o FUJITSU LIMITED, Kawasaki-shi, Kanagawa 211-8588 (JP); IDANI, Shigehiro, c/o FUJITSU LIMITED, Kawasaki-shi, Kanagawa 211-8588 (JP); MATSUYAMA, Yoshihiro, c/o FUJITSU LIMITED, Kawasaki-shi, Kanagawa 211-8588 (JP); SHIBA, Akira, c/o FUJITSU LIMITED, Kawasaki-shi, Kanagawa 211-8588 (JP); YAMADA, Hiroshi, c/o FUJITSU LIMITED, Kawasaki-shi, Kanagawa 211-8588 (JP); SHIOTSU, Shinichi, c/o FUJITSU LIMITED, Kawasaki-shi, Kanagawa 211-8588 (JP)
(74) Representative: Sunderland, James Harry
(86) International application number: PCT/JP2001/005863
(87) International publication number: WO 2003/005186

(56) References cited:
- JP-A- 10 154 069
- JP-A- 11 118 902
- JP-A- 11 191 025
- JP-A- 2001 014 152
- JP-A- 2001 084 189
- US-A- 5 724 530
- US-A- 6 018 571
- DAVID S LINTHICUM: "Automating OLE" DBMS ONLINE, [Online] March 1996 (1996-03), XP002384382 Retrieved from the Internet: URL:http://www.dbmsmag.com/9603d07.html> [retrieved on 2006-06-07]
- PATENT ABSTRACTS OF JAPAN vol. 1999, no. 10, 31 August 1999 (1999-08-31) & JP 11 143619 A (TOSHIBA CORP), 28 May 1999 (1999-05-28)

## Description

### FIELD OF THE INVENTION

The present invention relates to a portable information processing device for performing short-distance wireless communication with another information processing device, and in particular to a wireless portable viewer for performing short-distance RF wireless communication with a personal computer.

### BACKGROUND OF THE INVENTION

A wireless portable viewer, I-point^{™}, which is commercially available from Fujitsu has a compact size of approximately 10.4 cm x 5.5 cm x 1.4 cm, and has a limited number of keys including a pointing key. This viewer also provides a function of capturing an address book from a personal computer by means of short-distance RF wireless communication in compliance with the Bluetooth^{™} standard and then storing the address book into its memory, a function of displaying the address book on its liquid crystal display, a function of activating a particular application on the personal computer, and a function of pointing on a display of the personal computer (a so-called mouse function). The address book may contain not only a name of a person, a name of a company, an address and a telephone number, but also URLs, e-mail addresses and the like of the person and the company.

Kensaku Fujii in Japanese Patent Publication JP-A-2001-6083 published on January 12, 2001 discloses a portable mobile telephone service, in which information for identifying a location, such as an address, is transmitted from a mobile telephone over a network to a server, and the server retrieves a map associated with the information and transmits the map back to the mobile telephone to thereby display the map on a display unit of the mobile telephone.

When information is displayed on the display unit of the mobile telephone, it may be hard to see the information because of the small size of the display unit. Information associated with the URLs of companies and persons is usually prepared in a display size suitable for personal computers, and hence it is difficult for a user to watch it on a mobile telephone. In addition, the operations for preparing an e-mail on a mobile telephone is troublesome.

In a conventional personal computer, it is known to activate, through a particular user interface, an application for retrieving and displaying a map in accordance with information for identifying a location, such as an address, so as to retrieve and display the map associated with the location identification information on a display unit of the personal computer.

It is known that, when a mouse is clicked on a URL indication displayed on a display unit of a personal computer, a Web browser is activated. It is also known that, when an e-mail address is contained in a document prepared using a word processor application, clicking on the e-mail address indication in the document displayed on a display unit of a personal computer, causes it to open a window for preparing an e-mail message to be transmitted to the e-mail address.

Tatsuki Washimi in Japanese Patent Publication JP-A-HEI 11-288397 published on October 19, 1999 discloses a process, in which a user first presses an Internet connection key on a remote controller to connect an Internet television apparatus to a server via the Internet. Then, in response to operation by the user, the remote controller receives a plurality of URLs from the server via the television apparatus, and then displays the URLs on its display section. The user selects one of the URLs displayed on the display section using the remote controller for transmission to cause the television apparatus to transmit the URL to the server, so that the television apparatus receives a corresponding home page's data from the server.

Tadashi Ezaki in Japanese Patent Publication JP-A-HEI 10-257455 published on September 25, 1998 discloses an Internet television apparatus, in which, when a user presses an access key on a remote controller while information associated with a URL is displayed, an Internet connection unit connects to the Internet in accordance with the URL contained in the vertical blanking interval (VBI) of a current video signal, to access a corresponding WWW site.

The inventors have recognized the need for allowing a user to select data from an address book stored in the wireless portable viewer which address book contains different types of data, such as geographical addresses, URLs and e-mail addresses, to transmit the selected data on an RF signal to any personal computer and to cause the personal computer to activate an application associated with the selected data.

DAVID S LINTHICUM: "Automating OLE" DBMS ONLINE, [Online] March 1996 (1996-03), XP002384382, Retrieved from the Internet: URL:http://www.dbmsmag.com/9603d07.html> [retrieved on 2006-06-07], discloses remote OLE automation technology allowing two applications in two different computers linked by a network to share data. In particular, as exemplified with the Microsoft Access and Excel applications (page 1) the first application (Access) in the first system can activate ("invoke") the second application (Excel) in the second system and send it data (to be analysed and charted).

WO 98/49813 concerns a destination website access system that employs a bar code reader cooperating with a personal computer or workstation for accessing a unique destination website through a remote Internet service provider (ISP). The address of the unique destination website is embedded within a visibly displayed bar code on a visible medium. In turn, the bar code on the visible medium is scanned and the workstation automatically connects the workstation to the destination website. There may be "hard" wire couplings of various components or these couplings may be provided alternately by means including, but not limited to, infrared or wireless couplings.

An object of the invention is to provide an enhanced wireless portable viewer which causes an information processing device to execute an application associated with data which is selected from various data stored in the portable viewer.

Another object of the invention is to provide a function in an information processing device for causing it to activate and execute an application associated with a selected data received from a wireless portable viewer.

### SUMMARY OF THE INVENTION

According to the present invention there is provided a portable device in accordance with claim 1. There is also provided an information processing device in accordance with claim 2 and a control program stored on a recording medium for use in an information processing device, in accordance with claim 11.

In an embodiment of the invention, the piece of identification data is data within an address book, and the wireless transceiver is in compliance with the Bluetooth standard.

According to the invention, an application in a information processing device that is associated with a piece of data selected from data stored in a portable device, such as wireless portable viewer, can be activated for execution.

### BRIEF DESCRIPTION OF THE DRAWINGS

FIGURE 1 shows a wireless portable viewer as a portable information processing device, and a personal computer as an information processing device, in accordance with the present invention;
FIGURE 2 shows a block diagram illustrating a schematic configuration of the enhanced wireless portable viewer and the personal computer having a control function;
FIGURE 3 shows a flowchart executed by the wireless portable viewer and the personal computer in accordance with the embodiment;
FIGURE 4 shows another flowchart executed by the wireless portable viewer and the personal computer in the configurations of FIGURES 1 and 2, in accordance with another embodiment;
FIGURE 5 shows a further flowchart executed by the wireless portable viewer and the personal computer in the configurations of FIGURES 1 and 2 in accordance with a still further embodiment;
FIGURE 6 shows a still further flowchart executed by the wireless portable viewer and the personal computer in the configurations of FIGURES 1 and 2 in accordance with a still further embodiment;
FIGURE 7 shows a still further flowchart executed by the wireless portable viewer and the personal computer in the configurations of FIGURES 1 and 2 in accordance with a still further embodiment; and
FIGURES 8A, 8B and 8C show examples of selecting from address book data displayed on the wireless portable viewer, and display screens displayed by associated applications in the personal computer.

### DETAILED DESCRIPTION OF THE PREFERRED EMBODIMENTS

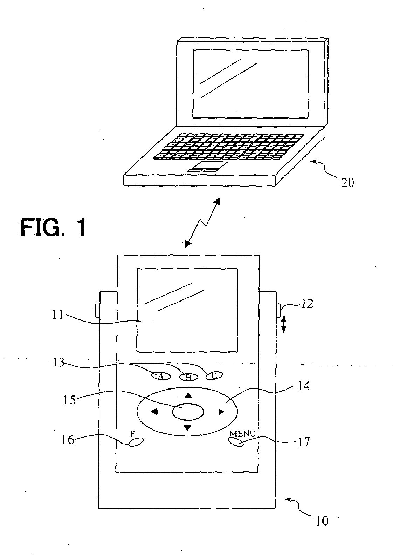

FIGURE 1 shows an enhanced wireless portable viewer 10 as a portable information processing device, and a personal computer (PC) 20 as an information processing device, in accordance with the invention. The wireless portable viewer 10 includes a display device 11 such as an LCD, and a slidable switch 12 for switching between a viewer mode of operation and a pointing mode of operation like a mouse. For the viewer mode of operation, the portable viewer 10 further includes: three application keys 13, each for activating a corresponding specific application on the personal computer; a control key 14 for controlling the cursor movement in the up, down, right and left directions on the display device 11; an execution key 15 for executing a function selected in the portable viewer 10; a function key 16 for displaying a command palette on the display device 11; and a menu key 17 for displaying a menu on the display device 11. When the switch 12 is placed on the position of the pointing mode of operation, the control key 14 controls the cursor movement in the up, down, right, left and oblique directions on the display screen of the PC 20, while the execution key 15 corresponds to a left click button of the mouse, and the function key 16 corresponds to a right click button of the mouse.

The PC 20 shown in FIGURE 1 is a personal computer capable of communicating with the wireless portable viewer 10 over an RF signal.

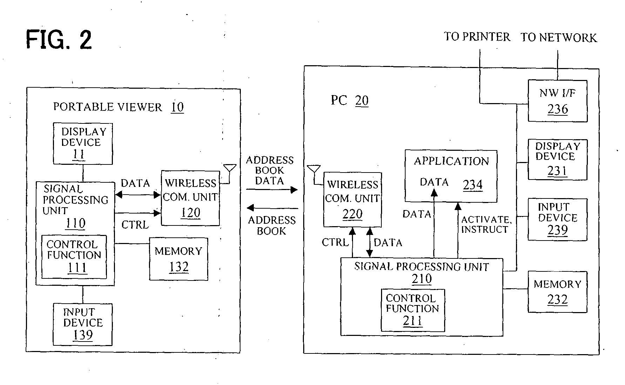

FIGURE 2 shows a block diagram illustrating a schematic configuration of the wireless portable viewer 10 and the PC 20 of FIGURE 1. In this figure, like numerals to FIGURE 1 designate like components.

In addition to the display device 11, the wireless portable viewer 10 includes: a signal processing unit 110; a short-distance wireless communication unit 120 in compliance with the Bluetooth standard for short-distance communication with a personal computer; a storage unit 132; and an input device 139 including the keys 12-17 shown in FIGURE 1. The signal processing unit 110 is typically a processor. The signal processing unit 110 includes a control function 111, which is implemented by the signal processing unit 110 to execute a control function program stored in the storage unit 132, such as a ROM, a RAM or the like. Alternatively, the control function 111 may be implemented in the form of hardware as a dedicated integrated circuit in the signal processing unit 110.

The PC 20 includes: a signal processing unit 210; a short-distance wireless communication unit 220 in compliance with the Bluetooth standard for short-distance communication; a display device 231; a storage unit 232; a network interface 236 coupled to an external network, such as the Internet; and an input device 239 including a keyboard, a mouse and the like. The signal processing unit 210 is typically a processor. The signal processing unit 210 includes a control function 211, which is implemented by the signal processing unit 210 to execute a control function program stored in the storage unit 232, such as a ROM, a RAM or the like. Alternatively, the control function 211 may be implemented in the form of hardware as a dedicated integrated circuit provided in the signal processing unit 210.

In addition to the control function program, the signal processing unit 210 further executes applications stored in the storage unit 232, such as a Web browser application, a mailer application including an e-mail preparing application, a map retrieving and displaying application, a word processor application and the like. The storage unit 232 further includes a RAM, a ROM, a magnetic disk, an optical disk or the like, which stores a map database and the like. The PC 20 is further connected to an external printer (not shown).

The wireless communication unit 120 in the portable viewer 10 and the wireless communication unit 220 in the PC 20 include respective Bluetooth modules for performing short-distance communication over an RF signal in accordance with the Bluetooth standard. Each module includes a baseband unit, a wireless transceiver unit, and a small antenna, such as a chip antenna. Each module uses a 2.4 GHz band (2.402-2.480 GHz) called an ISM (Industrial, Scientific and Medical) band, and operates preferably in Power Class 1 for the transmission power of 1 mW or lower.

In accordance with the key operation by a user, the wireless portable viewer 10 receives an address book, a list, a document file, an e-mail or the like in a predetermined format containing identification data, such as names of persons, company names, addresses, URLs and e-mail addresses, from the PC 20 or another personal computer, to pre-store it into the RAM in the storage unit 132. A type specific flag may be added to the identification data. For example, a geographical address flag may be added to a geographical address in the address book.

For example, the user presses the menu key 17 to thereby display a stored menu, such as "List", "Address Book", "Document File", "E-mail" or the like, on the display device 11. Then, the user operates the control key 14 and moves the cursor or the reversed indication, to select "Address Book", for example. The user then presses the execution key 15 to determine the selection. Thus the address book containing a list of names is displayed on the display device 11. The user operates the key 14 and selects a name in the address book, and then presses the execution key 15 to determine the selection. Thus the display device 11 displays address book data associated with the name, such as a company name, a company address, a company telephone number, a company facsimile telephone number, a company e-mail address, a company URL, and a home address, a home telephone number, a home facsimile telephone number and a private e-mail address.

In response to operation by the user, the control function 111 of the enhanced wireless portable viewer 10, in accordance with the invention, transmits data, such as a geographical address, a URL and an e-mail address, to the PC 20 via the wireless communication unit 120. When an address flag is added to the address, the address may be transmitted together with the flag.

The control function 211 of the PC 20, in accordance with the invention, receives data selected by the user, such as a geographical address, a URL and an e-mail address, from the wireless portable viewer 10 via the wireless communication unit 220, then activates an application associated with the data, and then passes the data to the application.

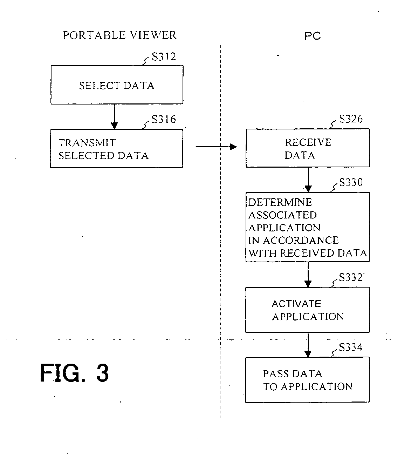

FIGURE 3 shows a flowchart executed by the wireless portable viewer 10 and the PC 20 in accordance with the embodiment. Steps 312-316 are executed by the wireless portable viewer 10. Steps 326-334 of FIGURE 3 are executed by the PC 20.

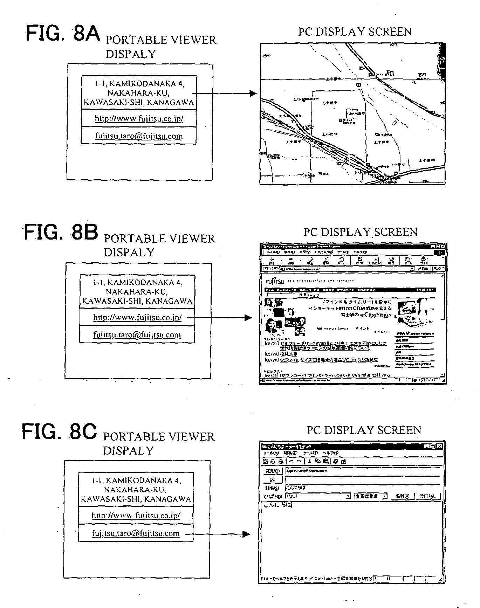

At Step 312 of FIGURE 3, the portable viewer 10 allows the user to select one piece of data from the address book data, such as a company address, a URL or an e-mail address (see the left portions of FIGURES 8A, 8B and 8C which will be described later), displayed on the display device 11, and then press the function key 16. Then, the portable viewer 10 displays, on the display device 11, an inquiry "Is this data to be transmitted?" for making the user determine the transmission of the data, and alternative replies "Yes" and "No" to the inquiry. The user can operate the control key 14 to select "Yes", and then press the execution key 15 to determine the transmission of the data.

At Step 316, in response to the determination of the data transmission, the portable viewer 10 transmits the selected address book data to the PC 20. More specifically, the control function 111 passes the determined address book data to the wireless communication unit 120, and then sends a control instruction to request the wireless communication unit 120 to transmit the data to the PC 20. In response to the request, the wireless communication unit 120 transmits the address book data to the PC 20.

At Step 326, the wireless communication unit 220 of the PC 20 receives the address book data. The wireless communication unit 220 passes the address book data to the control function 211 of the signal processing unit 210.

At Step 330, the control function 211 of the signal processing unit 210 of the PC 20 determines an associated application to be activated in the PC 20, in accordance with the type of the received address book data. For example, when the address book data is a geographical address, a map retrieving and displaying application is determined as an associated application. In this case, when the geographical address flag as described above is added to the address, this determination of the type is facilitated. When the received address book data is a URL (for example, http://...), a Web browser application is determined as an associated application. When the received address book data is an e-mail address containing a character "@", an e-mail preparing application is determined as an associated application.

An Step 332, the control function 211 invokes and activates the determined application in the signal processing unit 210. At Step 334, the control function 211 passes the address book data to the activated application. After that, the user operates the input device 239 of the PC 20 in a conventional manner to execute the application using the address book data.

FIGURES 8A, 8B and 8C show examples of selecting from address book data displayed on the wireless portable viewer 10, and the display screens displayed by associated applications in the PC 20.

In accordance with the flowchart of FIGURE 3, for example, when the user selects a geographical address from the address book data as shown in the left portion of FIGURE 8A displayed on the portable viewer 10 to transmit the selected data to the PC 20, the control function 211 of the PC 20 activates the map retrieving and displaying application, and then passes the address data to this application. The application fills in an address field with the address for displaying within a retrieval display screen on the display device 231 (not shown). When the user operates the input device 239 of the PC 20 (for example, presses a software retrieval key), the application retrieves a map associated with the address data from the database in the storage unit 232, and then displays the map on the display device 231 of the PC 20, as shown in the right-hand portion of FIGURE 8A. The user watches the map on the display device 231, and further may operate the input device 239 to print out the map, if necessary.

In accordance with the flowchart of FIGURE 3, for example, when the user selects a URL from the address book data as shown in the left portion of FIGURE 8B displayed on the portable viewer 10 to transmit the selected data to the PC 20, the control function 211 of the PC 20 activates the Web browser application, and then passes the URL to this application. The application fills in an address field with the URL for displaying within the first Web browser screen. When the user operates the input device 239 of the PC 20 so as to receive and display the associated Web page, the application receives the Web page associated with the URL, from the associated Web server, and then displays the Web page on the display device 231 of the PC 20 as shown in the right portion of FIGURE 8B. If the PC 20 is not connected to the external network, then, before the displaying of the Web page on the display device 231, the user issues a command for network connection in a window for controlling the network connection to connect the PC 20 to the external network via the network interface 236.

In accordance with the flowchart of FIGURE 3, for example, when the user selects an e-mail address from the address book data as shown in the left portion of FIGURE 8C displayed on the portable viewer 10 to transmit the selected data to the PC 20, the control function 211 of the PC 20 activates the e-mail preparing application, and then passes the e-mail address to this application. The application fills in an address field with the e-mail address for displaying within an e-mail preparation screen on the display device 231 of the PC 20, as shown in the right portion of FIGURE 8C. After that, the user prepares the e-mail on the PC 20, and then transmits the e-mail in a conventional manner. If the PC 20 is not connected to the external network, then, before the transmission of the e-mail, the user connects the PC 20 to the external network via the network interface 236.

In the above description, the wireless portable viewer 10 transmits the selected address book data to the PC 20 which has transmitted the address book data to the portable viewer. However, the selected address book data may be transmitted to another personal computer which has a similar application associated with the address book data, so that the other personal computer is caused to execute the associated application in accordance with the selected address book data in a manner similar to the above description.

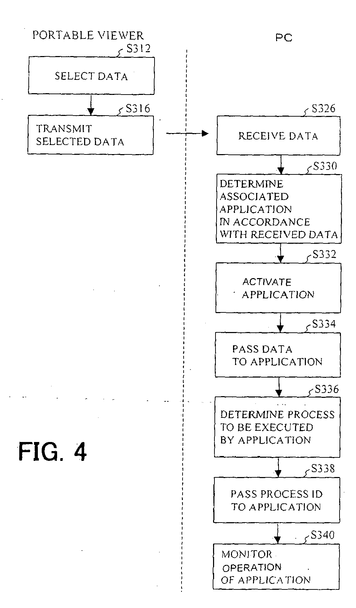

FIGURE 4 shows another flowchart executed by the wireless portable viewer 10 and the PC 20 having the configurations of FIGURES 1 and 2, in accordance with another embodiment. Steps 312-334 are the same as those of FIGURE 3, and hence are not described again. Steps 326-340 are executed by the PC 20.

At Step 336 of FIGURE 4, the control function 211 of the PC 20 further analyzes the received address book data, to determine an associated process to be executed in the activated application, in accordance with the type of the data. At Step 338, the control function 211 passes the identification or an instruction of the process to the application. The application executes the process in accordance with the identification of the process. At Step 340, the control function 211 monitors the state of operation of the application as to whether the operation is normal or not.

If the application to be activated at Step 332 is the Web browser application but the PC 20 is not connected to the external network, then, before the connection to the Web server, the control function 211 at Step 332 or 338 connects the PC 20 to the external network via the network interface 236.

In accordance with the flowchart of FIGURE 4, for example, when the user selects a geographical address from the address book data as shown in the left portion of FIGURE 8A displayed on the portable viewer 10 to transmit the selected data to the PC 20, the control function 211 of the PC 20 activates the map retrieving and displaying application, and then passes the address data and a retrieval command as the process identification to this application. The application fills in an address field with the address for displaying within a retrieval screen on the display device 231, and then retrieves a map associated with the address data to display the map on the display device 231 of the PC, as shown in the right portion of FIGURE 8A. The user watches the map on the display device 231, and further may operate the input device 239 to print out the map, if necessary. Alternatively, at Step 336, the control function 211 may determine the printout operation also as the process to be executed in the application, and then Step 338 passes an instruction of the printout as an additional process identification in addition to the above retrieval instruction, to the application, to cause the map retrieving and displaying application to print out the map using a printer.

In accordance with the flowchart of FIGURE 4, for example, when the user selects a URL from the address book data, as shown in the left portion of FIGURE 8B, displayed on the portable viewer 10 to transmit the selected data to the PC 20, the control function 211 of the PC 20 activates the Web browser application, and then passes the URL and an instruction of the access to the Web page as the process identification, to this application. The application accesses the Web page associated with the URL to display the Web page on the display device 231 of the PC 20. If the PC 20 is not connected to the external network, then, before the access to the Web page, the control function 211 passes an instruction of network connection to connect the PC 20 to the external network via the network interface 236.

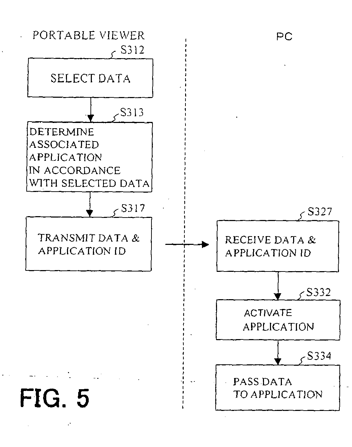

FIGURE 5 shows a further flowchart executed by the wireless portable viewer 10 and the PC 20 having the configurations of FIGURES 1 and 2 in accordance with a still further embodiment. Steps 312 and 332-334 are the same as those of FIGURE 3, and hence are not described again.

Steps 312-317 in the flowchart of FIGURE 5 are executed by the wireless portable viewer 10. At Step 312, the user presses the execution key 15 to determine the transmission of the address book data as described above. At Step 313, in a manner similar to Step 330 of FIGURE 3, the control function 111 determines an associated application to be activated in the PC 20 in accordance with the type of the address book data. At Step 317, in a manner similar to the above description, the control function 111 transmits, to the PC 20, the selected address book data and the identification or instruction (for example, an application name or an application identification flag) of the determined application.

Steps 327-334 of FIGURE 5 are executed by the PC 20.

At Step 327, the wireless communication unit 220 of the PC 20 receives the address book data and the identification of the application to be activated. The wireless communication unit 220 passes the address book data and the identification of the application to the signal processing unit 210. Without executing the Step 330 of FIGURE 3, the control function 211 executes Steps 332-334 similarly to those of FIGURE 3.

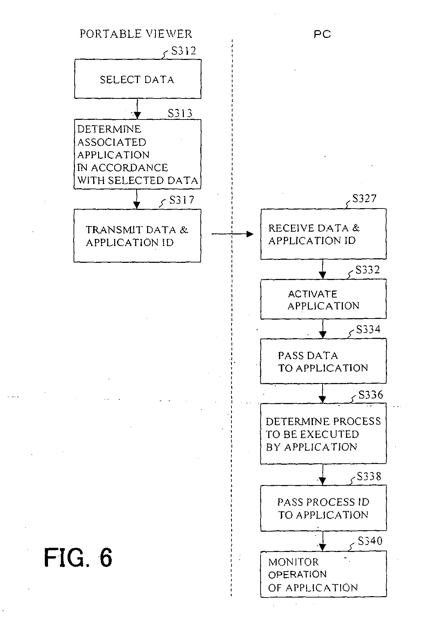

FIGURE 6 shows a still further flowchart executed by the wireless portable viewer 10 and the PC 20 having the configurations of FIGURES 1 and 2 in accordance with a still further embodiment. Steps 312-334 are the same as those of FIGURE 5, and Steps 336-340 are the same as those of FIGURE 3. Hence these steps are not described again.

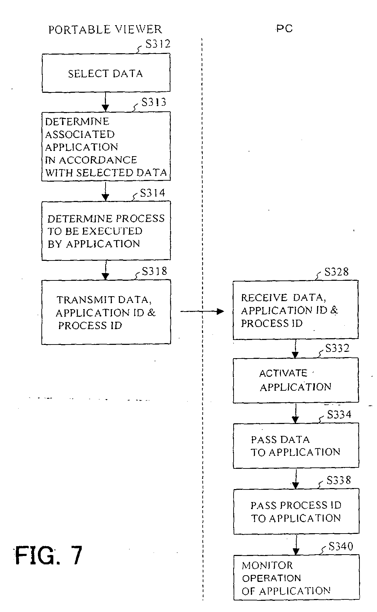

FIGURE 7 shows a still further flowchart executed by the wireless portable viewer 10 and the PC 20 having the configurations of FIGURES 1 and 2 in accordance with a still further embodiment. Steps 312-313 are the same as those of FIGURE 5, and Steps 332-340 are the same as those of FIGURE 6. Hence these steps are not described again.

Steps 312-318 of FIGURE 7 are executed by the wireless portable viewer 10. At Step 314, in a manner similar to Step 336 of FIGURE 4, the control function 111 further analyzes the address book data to determine an associated process to be executed in the application to be activated in the PC 20, in accordance with the type of the data. At Step 318, in a manner similar to the above description, the control function 111 transmits, to the PC 20, the selected address book data, the determined application identification, and the identification or instruction (for example, a map retrieval flag, a printout flag, or a Web page access flag) of the associated process to be executed in the application.

Steps 328-340 of FIGURE 7 are executed by the PC 20. At Step 328, the wireless communication unit 220 of the PC 20 receives the address book data, the name of the associated application to be activated, and the identification of the process to be executed in the application. The wireless communication unit 220 passes the address book data, the application identification, and the identification of the process to be executed in the application, to the signal processing unit 210. Without executing the Step 336 of FIGURE 6, the control function 211 executes Steps 332-334 and 338-340.

The above embodiments have been described in connection to the geographical addresses, URLs, and e-mail addresses stored in the portable information processing device, but the invention is not limited to these embodiments. The invention is also applicable to the transmission of other data in the address book and the activation of an associated application, and to the transmission of the data contained in a list, a document file, an e-mail, or the like stored in the portable information processing device and the activation of an associated application.

The above-described embodiments are only typical examples, and their modifications and variations are apparent to those skilled in the art. It is apparent that those skilled in the art can make various modifications to the above-described embodiments without departing from the principle of the invention and the accompanying claims.

## Claims

1. A portable device (10) for activating an application on an information processing device, wherein said portable device comprises:
a first signal processing unit (110), a first memory (132), a first display unit (11), a first input device (139) and a first wireless transceiver (120); and wherein
said portable device (10) is adapted to receive information containing a geographical address, a URL and/or an e-mail address from a first information processing device (20) via said first wireless transceiver to store the information into said first memory, and is adapted to display the information stored in said first memory on said first display unit in response to an instruction from said first input device;
said first signal processing unit of said portable device is adapted to transmit (S316; S317; S318), to a second information processing device, said second information processing device being the first on a further information processing device via said first wireless transceiver, a piece of identification data selected by a user from a plurality of pieces of identification data comprising a geographical address, a URL and/or an e-mail address, stored in said first memory such that
a second signal processing unit of the second information processing device receives (S326; S327; S328), via a second wireless transceiver, said selected piece of identification data transmitted from said portable device, and is caused to activate (S330, S332) an application associated with said selected piece of identification data on the second information processing device, to pass (S334) said selected piece of identification data to said activated application, and to display, on a display unit of the second information processing device a display screen of said activated application using information identified by said selected piece of identification data.

2. An information processing device (20) comprising:
a memory (232);
a display unit (231);
an input device (239);
a wireless transceiver (220); and
a signal processing unit (210), **characterized in that** said signal processing unit is adapted to send information containing a geographical address, a URL and/or an e-mail address as pieces of identification data to a first portable device via said wireless transceiver, and to receive (S326; S327; S328), from a a second portable device (10), said second portable being the first or a further portable device, via said wireless transceiver, a piece of identification data selected by a user of said second portable device from data displayed on a display of said second portable device, is adapted to activate (S330; S332) an application, associated with said selected piece of identification data, on said information processing device, is adapted to pass (S334) said selected piece of identification data to said activated application, and is adapted to display,
on said display unit, a display screen of said activated application using information identified by said selected piece of identification data.

3. An information processing device according to claim 2, wherein said piece of identification data is data within an address book.

4. An information processing device according to claim 2,
wherein said signal processing unit (210) is adapted to receive identification data of said application associated with said selected piece of identification data, from said second portable device (10), via said wireless transceiver (220).

5. An information processing device according to claim 2,
wherein said signal processing unit (210) is adapted further to cause said associated application to execute a process associated with said selected piece of identification data.

6. An information processing device according to claim 2,
wherein said signal processing unit (210) is adapted to receive identification data of a process to be executed by said application, from said second portable device (10) via said wireless transceiver (220), and is adapted to pass the identification of said process to said associated application.

7. An information processing device according to claim 2, wherein, in accordance with said selected piece of identification data, said signal processing unit (210) is operable to determine an associated process to be executed by said associated application, and is adapted to pass identification data of said process to said associated application.

8. An information processing device according to claim 2,
wherein said signal processing unit (210) is adapted further to monitor the operation of said application.

9. An information processing device according to claim 2, wherein said wireless transceiver (220) is in compliance with the Bluetooth standard.

10. A system comprising:
a portable device (10) according to claim 1; and
an information processing device (20) according to any of claims 2 to 9.

11. A control program stored on a recording medium for use in an information processing device (20), said information processing device comprising a signal processing unit (210), a memory (232), a display unit (231), an input device (239) and a wireless transceiver (220), said program being operable to effect the steps of: sending, via said wireless transceiver (220), information containing a geographical address, a URL and/or an e-mail adress as pieces of identification data,
receiving, via said wireless transceiver (220), a piece of identification data selected by a user from a plurality of pieces of identification data, such as a geographical address, a URL, and/or an e-mail address, activating an application associated with said selected piece of identification data on said information processing device, passing said selected piece of identification data to said activated application, and displaying, on said display unit, a display screen of said activated application using information identified by said selected piece of identification data.

12. A control program according to claim 11 being operable to further effect the step of: causing said associated application to execute a process associated with said selected piece of identification data.

13. A control program according to claim 11 being operable to further effect the step of: determining, in accordance with said selected piece of identification data, an associated process to be executed by said associated application, and passing identification data of said process to said associated application.

## Patentansprüche

1. Tragbares Gerät (10) zum Aktivieren einer Anwendung auf einer Informationsverarbeitungsvorrichtung, welches tragbare Gerät umfasst:
eine erste Signalverarbeitungseinheit (110), einen ersten Speicher (132), eine erste Anzeigeeinheit (11), eine erste Eingabevorrichtung (139) und einen ersten drahtlosen Transceiver (120); und bei dem
das tragbare Gerät (10) dafür ausgelegt ist, um Informationen, die eine geographische Adresse, eine URL und/oder eine E-Mail-Adresse enthalten, von einer Informationsverarbeitungsvorrichtung (20) über den ersten drahtlosen Transceiver zu empfangen, um die Informationen in dem ersten Speicher zu speichern, und dafür ausgelegt ist, um die in dem ersten Speicher gespeicherten Informationen an der ersten Anzeigeeinheit als Antwort auf eine Instruktion von der ersten Eingabevorrichtung anzuzeigen;
die erste Signalverarbeitungseinheit des tragbaren Gerätes dafür ausgelegt ist, um über den ersten drahtlosen Transceiver eine Identifikationsdatenangabe, die durch einen Nutzer von einer Vielzahl von Identifikationsdatenangaben selektiert wird, die eine geographische Adresse, eine URL und/oder eine E-Mail-Adresse umfassen, die in dem ersten Speicher gespeichert sind, an eine zweite Informationsverarbeitungsvorrichtung zu senden (S316; S317; S318), welche zweite Informationsverarbeitungsvorrichtung die erste oder eine weitere Informationsverarbeitungsvorrichtung ist, so dass
eine zweite Signalverarbeitungseinheit der zweiten Informationsverarbeitungsvorrichtung über einen zweiten drahtlosen Transceiver die selektierte Identifikationsdatenangabe, die von dem tragbaren Gerät gesendet wurde, empfängt (S326; S327; S328) und dazu gebracht wird, eine Anwendung, die der selektierten Identifikationsdatenangabe zugeordnet ist, auf der zweiten Informationsverarbeitungsvorrichtung zu aktivieren (S330, S332), um die selektierte Identifikationsdatenangabe an die aktivierte Anwendung weiterzuleiten (S334) und an einer Anzeigeeinheit der zweiten Informationsverarbeitungsvorrichtung einen Bildschirm der aktivierten Anwendung unter Verwendung von Informationen anzuzeigen, die durch die selektierte Identifikationsdatenangabe identifiziert werden.

2. Informationsverarbeitungsvorrichtung (20), umfassend:
einen Speicher (232);
eine Anzeigeeinheit (231);
eine Eingabevorrichtung (239);
einen drahtlosen Transceiver (220); und
eine Signalverarbeitungseinheit (210), **dadurch gekennzeichnet, dass** die Signalverarbeitungseinheit dafür ausgelegt ist, um Informationen, die eine geographische Adresse, eine URL und/oder eine E-Mail-Adresse enthalten, als Identifikationsdatenangaben an ein erstes tragbares Gerät über den drahtlosen Transceiver zu senden und von einem zweiten tragbaren Gerät (10), welches zweite tragbare Gerät das erste oder ein weiteres tragbares Gerät ist, über den drahtlosen Transceiver eine Identifikationsdatenangabe zu empfangen (S326; S327; S328), die durch einen Nutzer des zweiten tragbaren Gerätes von Daten selektiert wurde, die an einer Anzeige des zweiten tragbaren Gerätes angezeigt wurden, dafür
ausgelegt ist, um eine Anwendung, die der selektierten Identifikationsdatenangabe zugeordnet ist, auf der Informationsverarbeitungsvorrichtung zu aktivieren (S330; S332), dafür ausgelegt ist, um die selektierte Identifikationsdatenangabe an die aktivierte Anwendung weiterzuleiten (S334), und dafür ausgelegt ist, um an der Anzeigeeinheit einen Bildschirm der aktivierten Anwendung unter Verwendung von Informationen anzuzeigen, die durch die selektierte Identifikationsdatenangabe identifiziert werden.

3. Informationsverarbeitungsvorrichtung nach Anspruch 2, bei der die Identifikationsdatenangabe Daten innerhalb eines Adressbuchs sind.

4. Informationsverarbeitungsvorrichtung nach Anspruch 2, bei der die Signalverarbeitungseinheit (210) dafür ausgelegt ist, um Identifikationsdaten der genannten Anwendung, die der selektierten Identifikationsdatenangabe zugeordnet ist, von dem zweiten tragbaren Gerät (10) über den drahtlosen Transceiver (220) zu empfangen.

5. Informationsverarbeitungsvorrichtung nach Anspruch 2, bei der die Signalverarbeitungseinheit (210) ferner dafür ausgelegt ist, um zu bewirken, dass die zugeordnete Anwendung einen Prozess ausführt, welcher der selektierten Identifikationsdatenangabe zugeordnet ist.

6. Informationsverarbeitungsvorrichtung nach Anspruch 2, bei der die Signalverarbeitungseinheit (210) dafür ausgelegt ist, um Identifikationsdaten eines Prozesses, der durch die Anwendung auszuführen ist, von dem zweiten tragbaren Gerät (10) über den drahtlosen Transceiver (220) zu empfangen, und dafür ausgelegt ist, um die Identifikation des Prozesses an die zugeordnete Anwendung weiterzuleiten.

7. Informationsverarbeitungsvorrichtung nach Anspruch 2, bei der gemäß der selektierten Identifikationsdatenangabe die Signalverarbeitungseinheit (210) betriebsfähig ist, um einen zugeordneten Prozess zu bestimmen, um durch die zugeordnete Anwendung ausgeführt zu werden, und dafür ausgelegt ist, um Identifikationsdaten des Prozesses an die zugeordnete Anwendung weiterzuleiten.

8. Informationsverarbeitungsvorrichtung nach Anspruch 2, bei der die Signalverarbeitungseinheit (210) ferner dafür ausgelegt ist, um den Betrieb der Anwendung zu überwachen.

9. Informationsverarbeitungsvorrichtung nach Anspruch 2, bei der der drahtlose Transceiver (220) dem Bluetooth-Standard entspricht.

10. System, umfassend:
ein tragbares Gerät (10) nach Anspruch 1; und
eine Informationsverarbeitungsvorrichtung (20) nach einem der Ansprüche 2 bis 9.

11. Steuerprogramm, das auf einem Aufzeichnungsmedium zur Verwendung in einer Informationsverarbeitungsvorrichtung (20) gespeichert ist, welche Informationsverarbeitungsvorrichtung eine Signalverarbeitungseinheit (210), einen Speicher (232), eine Anzeigeeinheit (231), eine Eingabevorrichtung (239) und einen drahtlosen Transceiver (220) umfasst, wobei das Programm betriebsfähig ist, um die Schritte zu bewirken:
Senden, über den drahtlosen Transceiver (220), von Informationen, die eine geographische Adresse, eine URL und/oder eine E-Mail-Adresse enthalten, als Identifikationsdatenangaben, Empfangen, über den drahtlosen Transceiver (220), einer Identifikationsdatenangabe, die durch einen Nutzer von einer Vielzahl von Identifikationsdatenangaben selektiert wird, wie etwa einer geographischen Adresse, einer URL und/oder einer E-Mail-Adresse, Aktivieren einer Anwendung, die der selektierten Identifikationsdatenangabe zugeordnet ist, auf der Informations verarbeitungsvorrichtung, Weiterleiten der selektierten Identifikationsdatenangabe an die aktivierte Anwendung und Anzeigen, an der Anzeigeeinheit, eines Bildschirms der aktivierten Anwendung unter Verwendung von Informationen, die durch die selektierte Identifikationsdatenangabe identifiziert werden.

12. Steuerprogramm nach Anspruch 11, das betriebsfähig ist, um ferner den Schritt zu bewirken: Verursachen, dass die zugeordnete Anwendung einen Prozess ausführt, welcher der selektierten Identifikationsdatenangabe zugeordnet ist.

13. Steuerprogramm nach Anspruch 11, das betriebsfähig ist, um ferner den Schritt zu bewirken: Bestimmen, gemäß der selektierten Identifikationsdatenangabe, eines zugeordneten Prozesses, um durch die zugeordnete Anwendung ausgeführt zu werden, und Weiterleiten von Identifikationsdaten des genannten Prozesses an die zugeordnete Anwendung.

## Revendications

1. Dispositif portatif (10) destiné à activer une application sur un dispositif de traitement d'informations, ledit dispositif portatif comprenant :
une première unité de traitement de signal (110), une première mémoire (132), une première unité d'affichage (11), un premier dispositif d'entrée (139) et un premier émetteur-récepteur sans fil (120) ; et dans lequel ledit dispositif portatif (10) est conçu pour recevoir des informations contenant une adresse géographique, une URL et/ou une adresse de courrier électronique en provenance d'un premier dispositif de traitement d'informations (20) par l'intermédiaire dudit premier émetteur-récepteur sans fil pour stocker les informations dans ladite première mémoire, et est conçu pour afficher les informations stockées dans ladite première mémoire sur ladite première unité d'affichage en réponse à une instruction provenant dudit premier dispositif d'entrée ;
ladite première unité de traitement de signal dudit dispositif portatif est conçue pour transmettre (S316 ; S317 ; S318), à un second dispositif de traitement d'informations, ledit second dispositif de traitement d'informations étant le premier ou un autre dispositif de traitement d'informations, par l'intermédiaire dudit premier émetteur-récepteur sans fil, un élément de données d'identification sélectionné par un utilisateur parmi une pluralité d'éléments de données d'identification comprenant une adresse géographique, une URL et/ou une adresse de courrier électronique, stockées dans ladite première mémoire de sorte que une seconde unité de traitement de signal du second dispositif de traitement d'informations reçoit (S326 ; S327 ; S328), par l'intermédiaire d'un second émetteur-récepteur sans fil, ledit élément de données d'identification sélectionné transmis depuis ledit dispositif portatif, et est amenée à activer (S330, S332) une application associée audit élément de données d'identification sélectionné sur le second dispositif de traitement d'informations, à faire passer (S334) ledit élément de données d'identification sélectionné à ladite application activée, et à afficher, sur une unité d'affichage du second dispositif de traitement d'informations, un écran d'affichage de ladite application activée utilisant les informations identifiées par ledit élément de données d'identification sélectionné.

2. Dispositif de traitement d'informations (20) comprenant :
une mémoire (232) ;
une unité d'affichage (231) ;
un dispositif d'entrée (239) ;
un émetteur-récepteur sans fil (220) ; et
une unité de traitement de signal (210), **caractérisé en ce que** ladite unité de traitement de signal est conçue pour envoyer des informations contenant une adresse géographique, une URL et/ou une adresse de courrier électronique en tant qu'éléments de données d'identification à un premier dispositif portatif par l'intermédiaire dudit émetteur-récepteur sans fil, et pour recevoir (S326 ; S327 ; S328), en provenance d'un second dispositif portatif (10), ledit second dispositif portatif étant le premier ou
un autre dispositif portatif, par l'intermédiaire dudit émetteur-récepteur sans fil, un élément de données d'identification sélectionné par un utilisateur dudit second dispositif portatif parmi les données affichées sur une unité d'affichage dudit second dispositif portatif, est conçue pour activer (S330 ; S332) une application, associée audit élément de données d'identification sélectionné, sur ledit dispositif de traitement d'informations, est conçue pour faire passer (S334) ledit élément de données d'identification sélectionné à ladite application activée, et est conçue pour afficher, sur ladite unité d'affichage, un écran d'affichage de ladite application activée utilisant les informations identifiées par ledit élément de données d'identification sélectionné.

3. Dispositif de traitement d'informations selon la revendication 2, dans lequel ledit élément de données d'identification représente des données dans un carnet d'adresses.

4. Dispositif de traitement d'informations selon la revendication 2, dans lequel ladite unité de traitement de signal (210) est conçue pour recevoir des données d'identification de ladite application associée audit élément de données d'identification sélectionné, en provenance dudit second dispositif portatif (10), par l'intermédiaire dudit émetteur-récepteur sans fil (220).

5. Dispositif de traitement d'informations selon la revendication 2, dans lequel ladite unité de traitement de signal (210) est conçue en outre pour amener ladite application associée à exécuter un processus associé audit élément de données d'identification sélectionné.

6. Dispositif de traitement d'informations selon la revendication 2, dans lequel ladite unité de traitement de signal (210) est conçue pour recevoir des données d'identification d'un processus à exécuter par ladite application, en provenance dudit second dispositif portatif (10) par l'intermédiaire dudit émetteur-récepteur sans fil (220), et est conçue pour faire passer les données d'identification dudit processus à ladite application associée.

7. Dispositif de traitement d'informations selon la revendication 2, dans lequel, conformément audit élément de données d'identification sélectionné, ladite unité de traitement de signal (210) sert à déterminer un processus associé à exécuter par ladite application associée, et est conçue pour faire passer des données d'identification dudit processus à ladite application associée.

8. Dispositif de traitement d'informations selon la revendication 2, dans lequel ladite unité de traitement de signal (210) est conçue en outre pour surveiller le fonctionnement de ladite application.

9. Dispositif de traitement d'informations selon la revendication 2, dans lequel ledit émetteur-récepteur sans fil (220) est conforme à la norme Bluetooth.

10. Système comprenant :
un dispositif portatif (10) selon la revendication 1 ; et
un dispositif de traitement d'informations (20) selon l'une quelconque des revendications 2 à 9.

11. Programme de commande stocké sur un support d'enregistrement destiné à être utilisé dans un dispositif de traitement d'informations (20), ledit dispositif de traitement d'informations comprenant une unité de traitement de signal (210), une mémoire (232), une unité d'affichage (231), un dispositif d'entrée (239) et un émetteur-récepteur sans fil (220), ledit programme servant à effectuer les étapes consistant à :
envoyer, par l'intermédiaire dudit émetteur-récepteur sans fil (220), des informations contenant une adresse géographique, une URL et/ou une adresse de courrier électronique en tant qu'éléments de données d'identification, à recevoir, par l'intermédiaire dudit émetteur-récepteur sans fil (220), un élément de données d'identification sélectionné par un utilisateur parmi une pluralité d'éléments de données d'identification, tels qu'une adresse géographique, une URL et/ou une adresse de courrier électronique, à activer une application associée audit élément de données d'identification sélectionné sur ledit dispositif de traitement d'informations,
à faire passer ledit élément de données d'identification sélectionné à ladite application activée, et à afficher, sur ladite unité d'affichage, un écran d'affichage de ladite application activée utilisant les informations identifiées par ledit élément de données d'identification sélectionné.

12. Programme de commande selon la revendication 11 servant à effectuer en outre l'étape consistant à : amener ladite application associée à exécuter un processus associé audit élément de données d'identification sélectionné.

13. Programme de commande selon la revendication 11 servant à effectuer en outre l'étape consistant à : déterminer, conformément audit élément de données d'identification sélectionné, un processus associé à exécuter par ladite application associée, et à faire passer les données d'identification dudit processus à ladite application associée.
